# EUROPÄISCHE PATENTSCHRIFT

(11) **EP 2 193 291 B1**
(45) Veröffentlichungstag und Bekanntmachung des Hinweises auf die Patenterteilung: **23.11.2011**
(21) Anmeldenummer: 08803047.3
(22) Anmeldetag: 15.08.2008
(51) Int. Cl.: F16H 47/04, F16H 57/02

(54) **GETRIEBEVORRICHTUNG FÜR EIN FAHRZEUG MIT EINEM VARIATOR**
TRANSMISSION DEVICE FOR A VEHICLE, HAVING A VARIATOR
TRANSMISSION POUR UN VÉHICULE, ÉQUIPÉE D'UN VARIATEUR

(30) Priorität: 02.10.2007 DE 102007047194; 16.07.2008 DE 102008040447
(43) Veröffentlichungstag der Anmeldung: 09.06.2010
(73) Patentinhaber: ZF Friedrichshafen AG, 88038 Friedrichshafen (DE)
(72) Erfinder: GRAD, Karl, 94161 Ruderting (DE); POHLENZ, Jürgen, 88214 Ravensburg (DE); BAILLY, Gerhard, 88046 Friedrichshafen (DE); RATZMANN, Thomas, 88074 Meckenbeuren (DE)
(86) Internationale Anmeldenummer: PCT/EP2008/060755
(87) Internationale Veröffentlichungsnummer: WO 2009/047033

(56) Entgegenhaltungen:
- EP-A- 0 577 282
- DE-A1- 2 854 375
- US-A- 5 766 107
- US-A- 6 029 542
- US-A1- 2003 089 107

## Beschreibung

Die Erfindung betrifft eine Getriebevorrichtung für ein Fahrzeug mit einem Variator gemäß der im Oberbegriff des Patentanspruches 1 näher definierten Art.

Ein hydrostatisch-mechanisches Traktorengetriebe mit einem stufenlosen hydrostatischen Antrieb ist aus der DE 10 2006 025 348 A1 bekannt. Der hydrostatische Antrieb weist eine von einem Verbrennungsmotor angetriebene hydrostatische Pumpe und einen von der Pumpe angetriebenen Hydromotor auf. Die Pumpe und der Hydromotor sind über ein einziges, gemeinsames Schwenkteil zwangsgekoppelt und derart verstellbar, dass die Pumpe zwischen einem minimalen Winkel und einem maximalen Winkel verschwenkbar ist, während zugleich der Motor synchron von einem maximalen Schwenkwinkel zu einem minimalen Winkel verschwenkt. Die Pumpe ist für eine einzige Förderrichtung des Volumenstroms ausgelegt. Ein mechanisches Bereichsgetriebe mit mehreren Schaltstufen, die über eine Kupplung schaltbar sind, ist nachgeschaltet.

Darüber hinaus ist aus der DE 19 52 966 A eine Getriebevorrichtung mit Leistungsverzweigung bekannt, welche einen Variator, einen Doppelplanetenradsatz und eine Schaltgetriebeeinrichtung zur Darstellung mehrerer Fahrbereiche umfasst. Die Pumpen- und die Motoreinrichtung des als Hydrostateinrichtung ausgeführten Variators sind über ein gemeinsames Joch verstellbar.

Die EP 0 577 282 A offenbart eine Getriebevorrichtung nach dem Oberbegriff des Hauptanspruchs.

Der vorliegenden Erfindung liegt die Aufgabe zugrunde, die aus dem Stand der Technik bekannten Getriebevorrichtungen derart weiterzubilden, dass der Variator in einfacher Art und Weise aus seiner Einbaulage im Fahrzeug demontierbar ist.

Erfindungsgemäß wird diese Aufgabe mit einer Getriebevorrichtung gemäß den Merkmalen des Patentanspruches 1 gelöst.

Bei der erfindungsgemäßen Getriebevorrichtung für ein Fahrzeug mit einem Variator, der länger als breit und tief ist, mit einer Planetengetriebeeinrichtung, mit einer Schaltgetriebeeinrichtung und mit einem einen Ölsumpf aufweisenden Hydrauliksystem ist der Variator in seiner Längserstreckung in Einbaulage im Fahrzeug wenigstens annähernd horizontal orientiert.

In Abhängigkeit der räumlichen Anordnung des Variators in Bezug auf die Planetengetriebeeinrichtung und die Schaltgetriebeeinrichtung ist der Variator auf einfache Art und Weise in Bezug auf eine Fahrzeugoberseite nach oben, in Bezug auf eine Fahrzeugunterseite nach unten, in Bezug auf eine Vorwärtsfahrtrichtung nach vorne, in Richtung einer Fahrzeughinterachse oder seitlich aus einer Steckverbindung und von den Variator mit weiteren Getriebekomponenten verbindenden Verzahnungen abziehbar und somit auf einfache Art und Weise bei gleichzeitig geringem Bauraumbedarf der Getriebevorrichtung demontierbar.

Bei einer vorteilhaften Weiterbildung der Getriebevorrichtung nach der Erfindung ist der Variator wenigstens bereichsweise unterhalb eines Ölstandes des Ölsumpfes angeordnet, um den Variator auf besonders einfache Art und Weise ausgehend von einer Fahrzeugunterseite demontieren zu können. Um im Betrieb Verlustleistungen durch Ölplanschen der rotierenden Bauteile des Variators im Betrieb der Getriebevorrichtung nach der Erfindung zu vermeiden, ist der unterhalb des Ölstandes liegende Bereich des Variators durch Schotteinrichtungen vom Hydraulikfluid des Ölsumpfes abgeschottet.

Alternativ hierzu ist der Variator bei einer vorteilhaften Ausführungsform der Getriebevorrichtung nach der Erfindung zur Vermeidung von Planschverlusten oberhalb eines Ölstandes des Ölsumpfes angeordnet.

Eine weitere Ausführungsform der Getriebevorrichtung nach der Erfindung ist mit einem als Hydrostateinrichtung ausgebildeten Variator ausgeführt, um möglichst viel Leistung bei gleichzeitig geringem Bauraumbedarf der Getriebevorrichtung von einer Antriebsmaschine eines Fahrzeuges über die Getriebevorrichtung zu einem Abtrieb des Fahrzeuges führen zu können.

Bei bevorzugten Weiterbildungen der erfindungsgemäßen Getriebevorrichtung ist die Hydrostateinrichtung in Schrägachsenbauweise oder in Schrägscheibenbauweise mit jeweils wenigstens einer Verstelleinheit ausgeführt.

Eine kostengünstige und durch einen einfachen konstruktiven Aufbau gekennzeichnete Weiterbildung der Getriebevorrichtung nach der Erfindung ist mit einer wenigstens eine Konstanteinheit aufweisenden Hydrostateinrichtung ausgestaltet.

Über den Variator, die Planetengetriebeeinrichtung und die Schaltgetriebeeinrichtung darstellbare Übersetzungsbereiche, deren Übersetzungen jeweils stufenlos variierbar sind, sind bei einer weiteren Ausführungsform der Getriebevorrichtung nach der Erfindung, bei der die Hydrostateinrichtung wenigstens eine verstellbare Pumpeneinrichtung und mindestens eine verstellbare Motoreinrichtung aufweist, die unabhängig voneinander verstellbar ausgeführt sind, mit einer großen Spreizung zur Verfügung stellbar.

Bei einer hierzu alternativen Ausführungsform der Getriebevorrichtung nach der Erfindung weist die Hydrostateinrichtung wenigstens eine verstellbare Pumpeneinrichtung und mindestens eine verstellbare Motoreinrichtung auf, die gemeinsam verstellbar ausgeführt sind. Damit ist die Verstellung der Hydrostateinrichtung im Vergleich zur vorgenannten Ausführungsform der Getriebevorrichtung nach der Erfindung konstruktiv einfacher und kostengünstiger herstellbar.

Der Variator ist bei einer vorteilhaften Weiterbildung der erfindungsgemäßen Getriebevorrichtung in einfacher Art und Weise in Bezug auf die Planetengetriebeeinrichtung und die Schaltgetriebeeinrichtung beliebig positionierbar, da der Variator im Bereich einer ersten Welle und im Bereich einer zweiten Welle über einen Winkeltrieb jeweils mit einer Welle der Planetengetriebeeinrichtung verbunden ist. Zusätzlich bietet die Anbindung des Variators über Winkeltriebe den Vorteil, dass die Wirkverbindung des Variators mit der Planetengetriebeeinrichtung und der Schaltgetriebeeinrichtung mit kleineren Zahnrädern als bei einer Anbindung des Variators über Stirnradverzahnungen realisierbar ist.

Bei einer vorteilhaften Weiterbildung der Getriebevorrichtung nach der Erfindung ist der Variator in Einbaulage zwischen einer Antriebsmaschine des Fahrzeugs und der Planetengetriebeeinrichtung sowie der Schaltgetriebeeinrichtung angeordnet. Damit ist der Variator auf einfache Art und Weise durch Abziehen des Variators in Vorwärtsfahrtrichtung aus einem Fahrzeug ausbaubar, wenn seitlich keine Zugänglichkeit zum Getriebegehäuse besteht. Darüber hinaus ist der Variator auch einfach ausgehend von der Unterseite des Fahrzeuges bei entsprechender Zugänglichkeit ohne zusätzliches Demontieren von Fahrzeugteilen oder einem Kippen einer Fahrzeugkabine ausbaubar.

Bei in radialer Richtung jeweils einen geringen Bauraumbedarf aufweisenden Ausführungen der Getriebevorrichtung nach der Erfindung ist entweder der Variator zwischen dem Planetenradsatz und der Schaltgetriebeeinrichtung oder die Schaltgetriebeeinrichtung zwischen dem Planetenradsatz und dem Variator angeordnet.

Der Variator ist in Einbaulage in Bezug auf eine Fahrtrichtung des Fahrzeuges bei einer weiteren vorteilhaften und durch eine in axialer Richtung geringeren Bauraumbedarf gekennzeichneten Ausführungsform neben der Planetengetriebeeinrichtung und/oder der Schaltgetriebeeinrichtung angeordnet, wobei der Variator bei entsprechender Zugänglichkeit durch seitliches Abziehen aus einer Steckverbindung oder von den Variator mit weiteren Getriebekomponenten verbindenden Verzahnungen auf einfache Art und Weise entnehmbar.

Das Eintauchen drehender Bauteile des Variators in den Ölsumpf der erfindungsgemäßen Getriebevorrichtung ist bei einer durch einen geringen axialen Bauraumbedarf gekennzeichneten weiteren Ausführungsform der Getriebevorrichtung, bei der der Variator in Einbaulage und im Bezug auf eine Fahrzeughochachse räumlich oberhalb der Planetengetriebeeinrichtung und/oder der Schaltgetriebeeinrichtung angeordnet ist, vollständig vermieden, wobei diese Ausführungsform besonders bei zusätzlicher seitlicher Begrenzung des zur Verfügung stehenden Bauraums, beispielsweise durch eine definierte Rahmenbauweise des Fahrzeuges, besonders günstig ist. Zusätzlich besteht auf einfache Art und Weise die Möglichkeit, Ölströme eines als Hydrostateinheit ausgeführten Variators, beispielsweise Leckagen, Spülöl oder dergleichen, zur Schmierung von Getriebekomponenten der Getriebevorrichtung, die unterhalb des Variators angeordnet sind, zu verwenden. Darüber hinaus ist der Variator bei entsprechender Anordnung der Getriebevorrichtung nach der Erfindung durch Kippen der Fahrerkabine des mit der erfindungsgemäßen Getriebevorrichtung ausgeführten Fahrzeuges zu Servicezwecken in Bezug auf die Fahrzeughochachse einfach nach oben entnehmbar.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
Fig. 1 ein Räderschema eines ersten Ausführungsbeispieles der erfindungsgemäßen Getriebevorrichtung;
Fig. 2 eine schematisierte dreidimensionale Seitenansicht der Getriebevorrichtung gemäß Fig. 1;
Fig. 3 ein Räderschema eines zweiten Ausführungsbeispieles der erfindungsgemäßen Getriebevorrichtung;
Fig. 4 eine schematisierte dreidimensionale Seitenansicht einer ersten Ausführungsform der Getriebevorrichtung gemäß Fig. 3;
Fig. 5 eine schematisierte dreidimensionale Seitenansicht einer zweiten Ausführungsform der Getriebevorrichtung gemäß Fig. 3;
Fig. 6 ein Räderschema eines dritten Ausführungsbeispieles der Getriebevorrichtung nach der Erfindung; und
Fig. 7 ein Räderschema eines vierten Ausführungsbeispieles der Getriebevorrichtung nach der Erfindung.

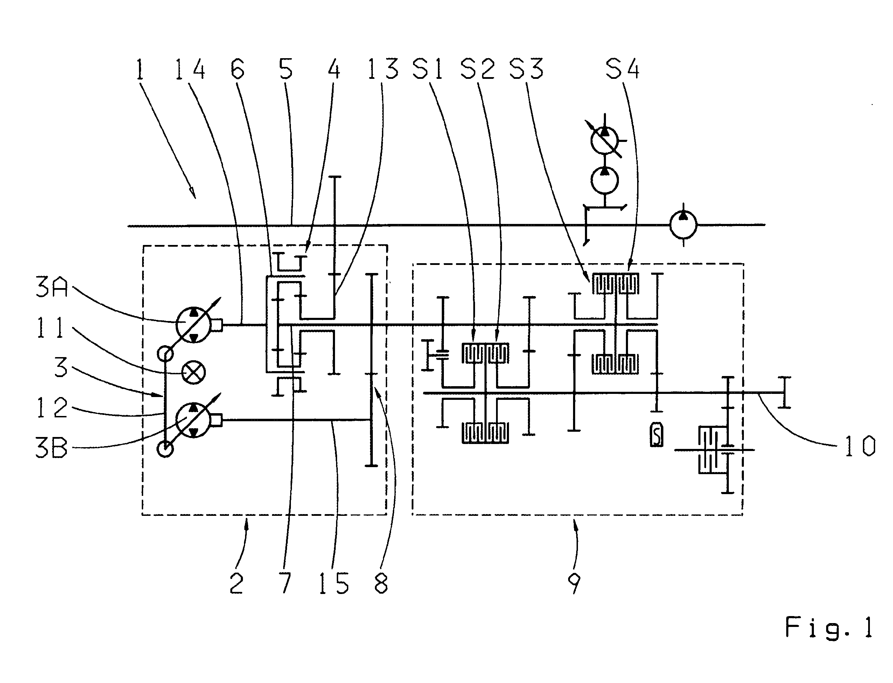

Fig. 1 zeigt ein Räderschema einer Getriebevorrichtung 1 mit stufenloser Übersetzungsverstellung, welches beispielsweise in landwirtschaftlichen Fahrzeugen einsetzbar ist. Über die Getriebevorrichtung 1 sind vorliegend drei Übersetzungsbereiche bzw. Fahrbereiche für Vorwärtsfahrt und ein Übersetzungsbereich für Rückwärtsfahrt darstellbar, innerhalb welchen die Übersetzung der Getriebevorrichtung stufenlos verstellbar ist.

Die stufenlose Verstellung der Getriebeübersetzung wird über einen stufenlosen Antriebssatz 2 ermöglicht, der einen Variator 3 und eine Planetengetriebeeinrichtung 4 umfasst. Mittels der Planetengetriebeeinrichtung 4 wird der nur begrenzt einstellbaren Drehzahl einer Getriebeantriebswelle 5, die mit einer Antriebsmaschine eines Fahrzeugs gekoppelt ist, die stufenlose Drehzahlverstellbarkeit des Variators 3 überlagert. Als Ergebnis dieser Überlagerung stehen im Bereich der Planetengetriebeeinrichtung 4 zwei Wellen 6, 7 der Planetengetriebeeinrichtung 4 mit stufenlos veränderbarer Drehzahl zur Verfügung, wobei die erste Welle 6 als Planetenträger der Planetengetriebeeinrichtung 4 ausgeführt ist und mit einer verstellbaren Pumpeneinrichtung 3A des Variators 3 gekoppelt ist. Die zweite Welle 7 ist ein Sonnenrad der Planetengetriebeeinrichtung 4, welche über eine Stirnradverzahnung 8 mit einer verstellbaren Motoreinrichtung 3B des Variators 3 in Wirkverbindung steht. Die Pumpeneinrichtung 3A und die Motoreinrichtung 3B des als Hydrostateinrichtung ausgeführten Variators 3 sind jeweils in Schrägachsenbauweise ausgebildet und im Bereich einer Schwenkachse 11 über ein gemeinsames Joch 12 verschwenkbar.

Der stufenlose Antriebssatz 2 ist mit einer Schaltgetriebeeinrichtung 9 gekoppelt, die in Abhängigkeit der Leistungsfähigkeit des Variators 5 und auch in Abhängigkeit der konstruktiven Ausgestaltung der Planetengetriebeeinrichtung 4 ausgebildet ist. Über die Schaltgetriebeeinrichtung 9 erfolgt die Leistungsübertragung vom stufenlosen Antriebssatz 2 in Richtung einer Getriebeabtriebswelle 10. Darüber hinaus werden im Bereich der Schaltgetriebeeinrichtung 9 die geforderten Abtriebsdrehzahlen in den verschiedenen Übersetzungsbereichen dargestellt.

Die Schaltgetriebeeinrichtung 9 ist mit vier reibschlüssigen Schaltelementen S1 bis S4 ausgestaltet, wobei bei geschlossenem ersten Schaltelement S1 der Fahrbereich für Rückwärtsfahrt in der Getriebevorrichtung 1 eingelegt ist. Die Schaltelemente S2 bis S4 sind zur Darstellung der drei Fahrbereiche für Vorwärtsfahrt vorgesehen.

Ein zweites Sonnenrad 13 der Planetengetriebeeinrichtung 4 ist mit der Getriebeantriebswelle 5 verbunden. Die Variatorwellen 14 und 15 sind somit jeweils an eine Welle 6, 7 der Planetengetriebeeinrichtung 4 gekoppelt, die keine direkte Verbindung mit der Getriebeantriebswelle 5 aufweisen. Darüber hinaus sind die Variatorwellen 14 und 15 achsparallel zu den Wellen 6, 7 der Planetengetriebeeinrichtung 4 angeordnet.

Um eine möglichst einfache Demontierbarkeit des Variators 3 im Servicefall zu ermöglichen und das Eintauchen drehender Bauteile des Variators 3 in den Ölsumpf der Getriebevorrichtung 1 unterhalb eines Ölstandes 18 zu vermeiden, ist der länger als breit und tief ausgeführte Variator in seiner Längserstreckung in Einbaulage im Fahrzeug wenigstens annähernd horizontal orientiert und oberhalb des Ölstandes 18 angeordnet. Damit werden auf einfache Art und Weise Schleppverluste bzw. durch Ölplanschen verursachte Leistungsverluste ohne aufwändige Schottungsmaßnahmen für den Variator 3 erreicht.

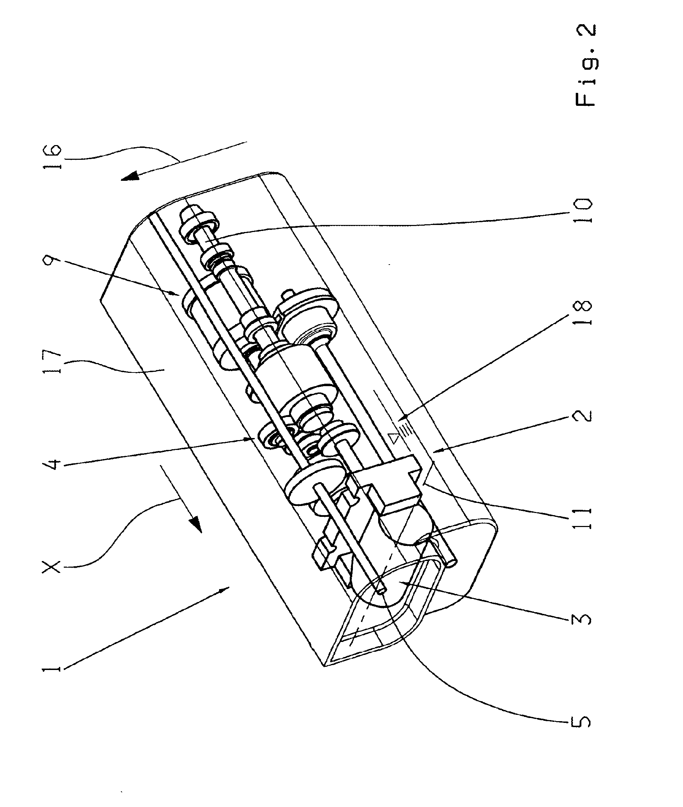

Zusätzlich ist der Variator 3 in Vorwärtsfahrtrichtung des Fahrzeuges, die durch den Pfeil X in Fig. 2 näher gekennzeichnet ist, vor der Planetengetriebeeinrichtung 4 und der Schaltgetriebeeinrichtung 9 angeordnet. Die Getriebevorrichtung 1 ist einerseits in radialer Richtung durch einen geringen Bauraumbedarf und andererseits durch eine größere axiale Länge gekennzeichnet. Zudem ist der Variator 3 aufgrund seiner in Vorwärtsfahrtrichtung X vorderen Anordnung einfach zu demontieren, wobei der Variator 3 in Abhängigkeit der jeweiligen Ausführung des Fahrzeuges in Bezug auf eine Fahrzeugvorderachse nach vorne, in Bezug auf eine Fahrzeugoberseite nach unten oder in Richtung einer Fahrzeughochachse 16 nach oben aus einem Fahrzeugrahmen 17 entnehmbar ist, der neben weiteren Fahrzeugkomponenten den für die Getriebevorrichtung 1 zur Verfügung stehenden Bauraum im Fahrzeug begrenzt.

Ist der Variator 3 zumindest bereichsweise unterhalb eines Ölstandes 18 der Getriebevorrichtung 1 angeordnet, ist der Variator 3 durch geeignete Schotteinrichtungen von dem in dem nicht näher dargestellten Ölsumpf der Getriebevorrichtung 1 angeordneten Hydraulikfluid abzuschotten, um im Betrieb der Getriebevorrichtung 1 sogenannte Planschverluste und somit eine Beeinträchtigung des Gesamtwirkungsgrades der Getriebevorrichtung 1 auf einfache Art und Weise zu vermeiden.

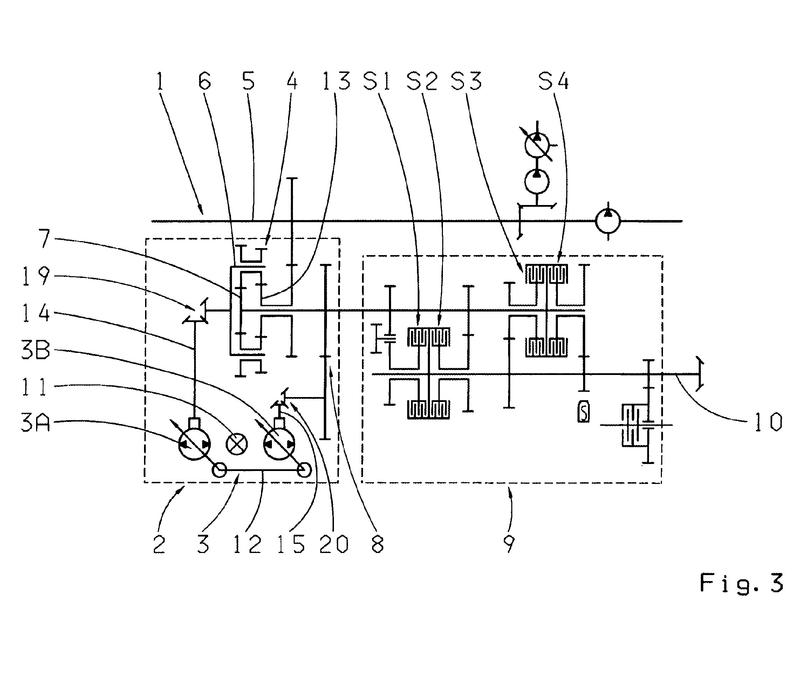

In Fig. 3 ist ein Räderschema eines zweiten Ausführungsbeispieles der Getriebevorrichtung 1 dargestellt, bei welcher die beiden Variatorwellen 14 und 15 jeweils über sogenannte Winkeltriebe 19 und 20 mit den Wellen 6 und 7 der Planetengetriebeeinrichtung 4 verbunden sind, wobei die Winkeltriebe 19, 20 jeweils durch miteinander kämmende Kegelräder bzw. Kegelradverzahnungen gebildet sind.

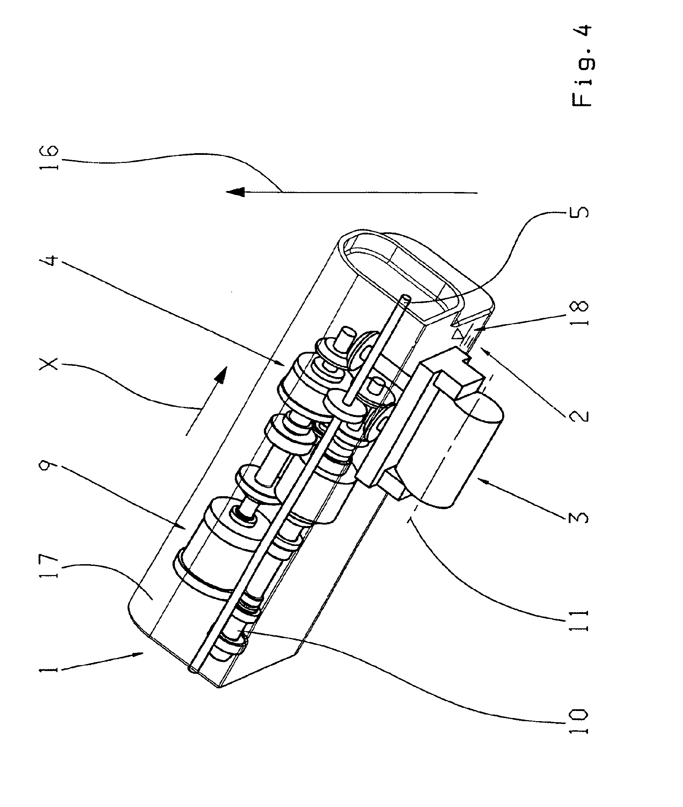

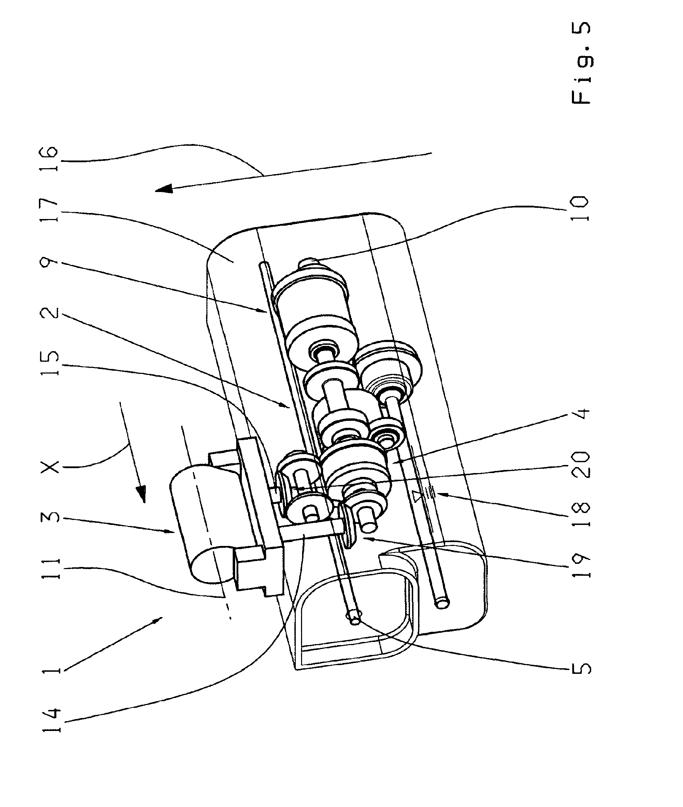

Die Variatorwellen 14 und 15 sind rechtwinklig zu den Wellen 6 und 7 der Planetengetriebeeinrichtung 4 angeordnet. Die Anbindung des Variators 3 über die beiden Winkeltriebe 19 und 20 an die Planetengetriebeeinrichtung 4 bietet auf einfache Art und Weise die Möglichkeit, den Variator 3 in der in Fig. 4 und Fig. 5 dargestellten Position neben bzw. oberhalb der Planetengetriebeeinrichtung 4 mit horizontaler Orientierung des Variators 3 anzuordnen.

Im Vergleich zu dem in Fig. 1 und Fig. 2 dargestellten ersten Ausführungsbeispiel, bei welchen der Variator 3 über Stirnradverzahnungen mit dem den Wellen 6, 7 der Planetengetriebeeinrichtung 4 angebunden ist, weist das zweite Ausführungsbeispiel der Getriebevorrichtung 1 gemäß Fig. 3 bis Fig. 5 einen geringeren axialen Bauraumbedarf auf. Zusätzlich ist der Variator 3 bei der ersten Variante des zweiten Ausführungsbeispieles der Getriebevorrichtung 1 gemäß Fig. 4 während einer Demontage mit geringem Aufwand von einer Fahrzeugseite ausgehend aus einer Steckverbindung und den Kegelradverzahnungen der Winkeltriebe 19 und 20 abziehbar ohne zuvor weitere Fahrzeugkomponenten demontieren zu müssen.

Bei der in Fig. 5 dargestellten zweiten Variante des zweiten Ausführungsbeispieles der Getriebevorrichtung 1 gemäß Fig. 3 wird das Eintauchen drehender Bauteile des Variators 3 in den Ölsumpf der Getriebevorrichtung 1 bei gleichzeitig minimalem axialen Bauraumbedarf und bei zusätzlich seitlicher Begrenzung des für die Getriebevorrichtung 1 zur Verfügung stehenden Bauraumes durch eine definierte Rahmenbauweise des Fahrzeugrahmens 17 vollständig vermieden.

Darüber hinaus sind bei der Ausführung der Getriebevorrichtung 1 gemäß Fig. 5 Ölströme aus dem Variator 3, welche aus Leckagen, einem Spülölvolumenstrom und dergleichen resultieren, zur Schmierung von in Bezug auf die Fahrzeughochachse 16 unterhalb des Variators 3 angeordneten Getriebekomponenten verwendbar.

Bei entsprechender Anordnung der Getriebevorrichtung 1 im Fahrzeugrahmen 17 ist der Variator 3 durch Kippen der Fahrerkabine auf einfache Art und Weise in Bezug auf die Fahrzeughochachse 16 nach oben zu Servicezwecken entnehmbar.

In Abhängigkeit des jeweils vorliegenden Anwendungsfalles besteht jedoch auch die Möglichkeit, den Variator in der in Fig. 1 und Fig. 2 dargestellten Anordnung über Winkeltriebe mit der Planetengetriebeeinrichtung zu verbinden.

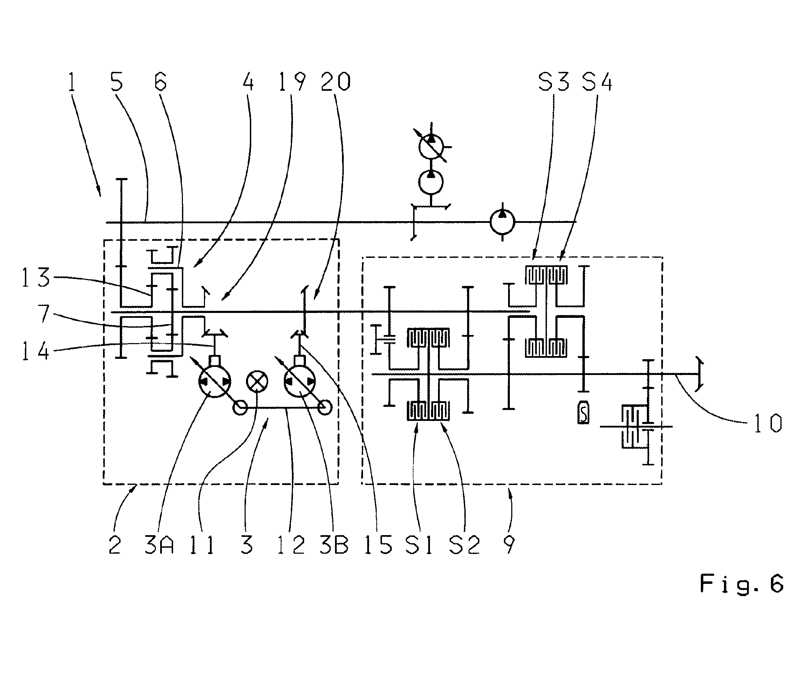

Da die zweite Ausführungsform der Getriebevorrichtung 1 in radialer Richtung unter Umständen einen zu großen Bauraumbedarf aufweist, ist der Variator (3) zur Verringerung des radialen Bauraumbedarfes der Getriebevorrichtung 1 bei dem in Fig. 6 dargestellten dritten Ausführungsbeispiel räumlich zwischen der Planetengetriebeeinrichtung 4 und der Schaltgetriebeeinrichtung 9 angeordnet. Der dadurch verlängerte axiale Bauraumbedarf der Getriebevorrichtung 1 steht im Bereich des Antriebsstranges von landwirtschaftlichen Maschinen meistens zur Verfügung, während der zur Verfügung stehende Bauraum in radialer Richtung oftmals begrenzt ist, so dass die vorbeschriebene Anordnung des Variators 3 neben bzw. oberhalb der Planetengetriebeeinrichtung 4 und/oder der Schaltgetriebeeinrichtung 9 nicht möglich ist.

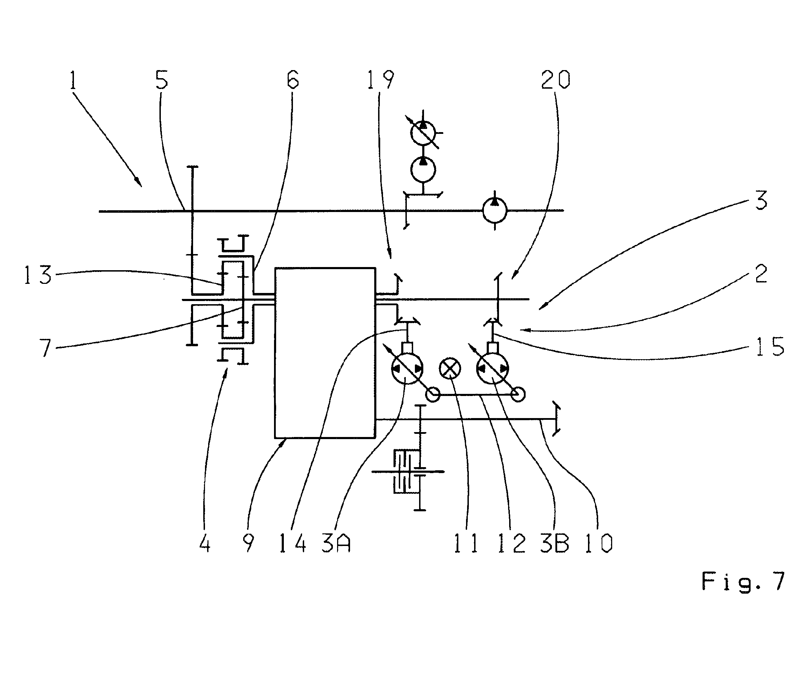

Alternativ hierzu ist der Variator 3 bei dem in Fig. 7 dargestellten vierten Ausführungsbeispiel der Getriebevorrichtung 1 in Vorwärtsfahrtrichtung X räumlich hinter der Schaltgetriebeeinrichtung 9 positioniert, so dass die Schaltgetriebeeinrichtung 9 zwischen dem Planetenradsatz 4 und dem Variator 3 angeordnet ist und die Getriebevorrichtung 1 in radialer Richtung einen geringeren Bauraumbedarf aufweist.

Grundsätzlich ist die leistungsverzweigte Getriebevorrichtung anstatt mit einem als Hydrostateinrichtung ausgeführten Variator auch mit anderen geeigneten Variatoren, wie beispielsweise einem Umschlingungsvariator, einem Reibradvariator oder dergleichen ausführbar, um die Übersetzung der Getriebevorrichtung in gewünschtem Umfang stufenlos und betriebszustandsabhängig variieren zu können.

Bezugszeichen
- 1: Getriebevorrichtung
- 2: stufenloser Antriebssatz
- 3: Variator
- 3A: Pumpeneinrichtung
- 3B: Motoreinrichtung
- 4: Planetengetriebeeinrichtung
- 5: Getriebeantriebswelle
- 6: Welle, Planetenträger
- 7: Welle, Sonnenrad
- 8: Stirnradverzahnung
- 9: Schaltgetriebeeinrichtung
- 10: Getriebeabtriebswelle
- 11: Schwenkachse
- 12: Joch
- 13: zweites Sonnenrad
- 14, 15: Variatorwelle
- 16: Fahrzeughochachse
- 17: Fahrzeugrahmen
- 18: Ölstand
- 19, 20: Winkeltrieb
- S1 bis S4: Schaltelement
- X: Vorwärtsfahrtrichtung

## Patentansprüche

1. Getriebevorrichtung (1) für ein Fahrzeug mit einem Variator (3), der länger als breit und tief ist, mit einer Planetengetriebeeinrichtung (4), mit einer Schaltgetriebeeinrichtung (9) und mit einem einen Ölsumpf aufweisenden Hydrauliksystem, wobei der Variator (3) in seiner Längserstreckung in Einbaulage im Fahrzeug wenigstens annähernd horizontal orientiert ist, **dadurch gekennzeichnet, dass** der Variator (3) im Bereich einer ersten Welle (14) und im Bereich einer zweiten Welle (15) über einen Winkeltrieb (18, 19) jeweils mit einer Welle der Planetengetriebeeinrichtung verbunden ist.

2. Getriebevorrichtung nach Anspruch 1, **dadurch gekennzeichnet, dass** der Variator wenigstens bereichsweise unterhalb eines Ölstandes des Ölsumpfes angeordnet und der unterhalb des Ölstandes liegende Bereich des Variators durch Schotteinrichtungen vom Hydraulikfluid abgeschottet ist.

3. Getriebevorrichtung nach Anspruch 1, **dadurch gekennzeichnet, dass** der Variator (3) oberhalb eines Ölstandes (18) des Ölsumpfes angeordnet ist.

4. Getriebevorrichtung nach einem der Ansprüche 1 bis 3, **dadurch gekennzeichnet, dass** der Variator (3) als Hydrostateinrichtung ausgebildet ist.

5. Getriebevorrichtung nach Anspruch 4, **dadurch gekennzeichnet, dass** die Hydrostateinrichtung (3) in Schrägachsenbauweise mit wenigstens einer Verstelleinheit (3A, 38) ausgeführt ist.

6. Getriebevorrichtung nach Anspruch 4, **dadurch gekennzeichnet, dass** die Hydrostateinrichtung in Schrägscheibenbauweise mit wenigstens einer Verstelleinheit ausgeführt ist.

7. Getriebevorrichtung nach einer der Ansprüche 4 bis 6, **dadurch gekennzeichnet, dass** die Hydrostateinrichtung wenigstens eine Konstanteinheit umfasst.

8. Getriebevorrichtung nach einem der Ansprüche 4 bis 7, **dadurch gekennzeichnet, dass** die Hydrostateinrichtung (3) wenigstens eine verstellbare Pumpeneinrichtung und mindestens eine verstellbare Motoreinrichtung aufweist, die unabhängig voneinander verstellbar ausgeführt sind.

9. Getriebevorrichtung nach einem der Ansprüche 4 bis 7, **dadurch gekennzeichnet, dass** die Hydrostateinrichtung (3) wenigstens eine verstellbare Pumpeneinrichtung (3A) und mindestens eine verstellbare Motoreinrichtung (3B) aufweist, die gemeinsam verstellbar ausgeführt sind.

10. Getriebevorrichtung nach einem der Ansprüche 1 bis 9, **dadurch gekennzeichnet, dass** der Variator (3) in Einbaulage räumlich zwischen einer Antriebsmaschine des Fahrzeuges und der Planetengetriebeeinrichtung (4) sowie der Schaltgetriebeeinrichtung (9) angeordnet ist

11. Getriebevorrichtung nach einem der Ansprüche 1 bis 9, **dadurch gekennzeichnet, dass** der Variator (3) räumlich zwischen der Planentengetriebeeinrichtung (4) und der Schaltgetriebeeinrichtung (9) angeordnet ist.

12. Getriebevorrichtung nach einem der Ansprüche 1 bis 9, **dadurch gekennzeichnet, dass** die Schaltgetriebeeinrichtung (9) räumlich zwischen der Planetengetriebeeinrichtung (4) und dem Variator (3) angeordnet ist.

13. Getriebevorrichtung nach einem der Ansprüche 1 bis 9, **dadurch gekennzeichnet, dass** der Variator (3) in Einbaulage in Bezug auf eine Fahrtrichtung des Fahrzeuges räumlich neben der Planetengetriebeeinrichtung (4) und/oder der Schaltgetriebeeinrichtung (9) angeordnet ist.

14. Getriebevorrichtung nach einem der Ansprüche 1 bis 9, **dadurch gekennzeichnet, dass** der Variator (3) in Einbaulage und in Bezug auf eine Fahrzeughochachse (16) räumlich oberhalb der Planetengetriebeeinrichtung (4) und/oder der Schaltgetriebeeinrichtung (9) angeordnet ist.
(Weiter auf Blatt 16 der ursprünglich eingereichten Unterlagen.)

## Claims

1. Transmission device (1) for a vehicle, having a variator (3) which is longer than it is wide and deep, having a planetary gearing unit (4), having a shift transmission unit (9) and having a hydraulic system which has an oil sump, wherein the variator (3) is aligned at least approximately horizontally in terms of its longitudinal extent in the installed position in the vehicle, **characterized in that** the variator (3) is connected, in the region of a first shaft (14) and in the region of a second shaft (15), via an angle drive (18, 19) in each case to one shaft of the planetary gearing unit.

2. Transmission device according to Claim 1, **characterized in that** the variator is arranged at least in regions below an oil level of the oil sump, and that region of the variator which is situated below the oil level is partitioned off from the hydraulic fluid by partitioning devices.

3. Transmission device according to Claim 1, **characterized in that** the variator (3) is arranged above an oil level (18) of the oil sump.

4. Transmission device according to one of Claims 1 to 3, **characterized in that** the variator (3) is designed as a hydrostatic unit.

5. Transmission device according to Claim 4, **characterized in that** the hydrostatic unit (3) is of oblique-axis design with at least one adjusting unit (3A, 3B).

6. Transmission device according to Claim 4, **characterized in that** the hydrostatic unit is of swashplate-type design with at least one adjusting unit.

7. Transmission device according to one of Claims 4 to 6, **characterized in that** the hydrostatic unit comprises at least one constant unit.

8. Transmission device according to one of Claims 4 to 7, **characterized in that** the hydrostatic unit (3) has at least one adjustable pump device and at least one adjustable motor device which are designed so as to be adjustable independently of one another.

9. Transmission device according to one of Claims 4 to 7, **characterized in that** the hydrostatic unit (3) has at least one adjustable pump device (3A) and at least one adjustable motor device (3B) which are designed so as to be jointly adjustable.

10. Transmission device according to one of Claims 1 to 9, **characterized in that** the variator (3), in the installed position, is arranged spatially between a drive engine of the vehicle and the planetary gearing unit (4) and the shift transmission unit (9).

11. Transmission device according to one of Claims 1 to 9, **characterized in that** the variator (3) is arranged spatially between the planetary gearing unit (4) and the shift transmission unit (9).

12. Transmission device according to one of Claims 1 to 9, **characterized in that** the shift transmission unit (9) is arranged spatially between the planetary gearing unit (4) and the variator (3).

13. Transmission device according to one of Claims 1 to 9, **characterized in that** the variator (3), in the installed position, is arranged spatially adjacent to the planetary gearing unit (4) and/or the shift transmission unit (9) with respect to a direction of travel of the vehicle.

14. Transmission device according to one of Claims 1 to 9, **characterized in that** the variator (3), in the installed position, is arranged spatially above the planetary gearing unit (4) and/or the shift transmission unit (9) with respect to a vehicle vertical axis (16).

## Revendications

1. Dispositif de transmission (1) pour un véhicule comprenant un variateur (3), qui est plus long que large et profond, comprenant un dispositif à transmission planétaire (4), avec un dispositif à transmission à changement de vitesse (9) et un système hydraulique présentant un carter d'huile, le variateur (3) étant orienté dans son étendue longitudinale dans la position installée dans le véhicule au moins approximativement horizontalement, **caractérisé en ce que** le variateur (3), dans la région d'un premier arbre (14) et dans la région d'un deuxième arbre (15), est connecté par le biais d'une transmission angulaire (18, 19) à chaque fois à un arbre du dispositif à transmission planétaire.

2. Dispositif de transmission selon la revendication 1, **caractérisé en ce que** le variateur est disposé au moins en partie sous un niveau d'huile du carter d'huile et la région située en dessous du niveau d'huile du variateur est isolée du fluide hydraulique par des dispositifs de cloisonnement.

3. Dispositif de transmission selon la revendication 1, **caractérisé en ce que** le variateur (3) est disposé au-dessus d'un niveau d'huile (18) du carter d'huile.

4. Dispositif de transmission selon l'une quelconque des revendications 1 à 3, **caractérisé en ce que** le variateur (3) est réalisé sous forme de dispositif hydrostatique.

5. Dispositif de transmission selon la revendication 4, **caractérisé en ce que** le dispositif hydrostatique (3) est réalisé suivant une construction à axes obliques avec au moins une unité de réglage (3A, 3B).

6. Dispositif de transmission selon la revendication 4, **caractérisé en ce que** le dispositif hydrostatique est réalisé suivant une construction à disques obliques avec au moins une unité de réglage.

7. Dispositif de transmission selon l'une quelconque des revendications 4 à 6, **caractérisé en ce que** le dispositif hydrostatique comprend au moins une unité constante.

8. Dispositif de transmission selon l'une quelconque des revendications 4 à 7, **caractérisé en ce que** le dispositif hydrostatique (3) présente au moins un dispositif de pompe réglable et au moins un dispositif de moteur réglable, qui sont réalisés de manière réglable indépendamment l'un de l'autre.

9. Dispositif de transmission selon l'une quelconque des revendications 4 à 7, **caractérisé en ce que** le dispositif hydrostatique (3) présente au moins un dispositif de pompe réglable (3A) et au moins un dispositif de moteur réglable (3B) qui sont réalisés de manière réglable en commun.

10. Dispositif de transmission selon l'une quelconque des revendications 1 à 9, **caractérisé en ce que** le variateur (3), dans la position installée, est disposé spatialement entre une machine motrice du véhicule et le dispositif à transmission planétaire (4) ainsi que le dispositif à transmission à changement de vitesse (9).

11. Dispositif de transmission selon l'une quelconque des revendications 1 à 9, **caractérisé en ce que** le variateur (3) est disposé spatialement entre le dispositif à transmission planétaire (4) et le dispositif à transmission à changement de vitesse (9).

12. Dispositif de transmission selon l'une quelconque des revendications 1 à 9, **caractérisé en ce que** le dispositif à transmission à changement de vitesse (9) est disposé spatialement entre le dispositif à transmission planétaire (4) et le variateur (3).

13. Dispositif de transmission selon l'une quelconque des revendications 1 à 9, **caractérisé en ce que** le variateur (3), dans la position installée, est disposé par rapport à une direction de conduite du véhicule, spatialement à côté du dispositif à transmission planétaire (4) et/ou du dispositif à transmission à changement de vitesse (9).

14. Dispositif de transmission selon l'une quelconque des revendications 1 à 9, **caractérisé en ce que** le variateur (3), dans la position installée et par rapport à un axe vertical du véhicule (16), est disposé spatialement au-dessus du dispositif à transmission planétaire (4) et/ou du dispositif à transmission à changement de vitesse (9).
